# EUROPEAN PATENT SPECIFICATION

(11) **EP 4 124 735 B1**
(45) Date of publication and mention of the grant of the patent: **19.03.2025**
(21) Application number: 22187338.3
(22) Date of filing: 27.07.2022
(51) Int. Cl.: F02C 3/22, F02C 7/22, F02C 7/232, F02C 9/26, F02C 9/40

(54) **CONTROLLING GASEOUS FUEL FLOW IN AN AIRCRAFT ENGINE**
STEUERN EINES GASFÖRMIGEN BRENNSTOFFSTROMS IN EINEM FLUGZEUGMOTOR
COMMANDE DE DÉBIT DE CARBURANT GAZEUX DANS UN MOTEUR D'AÉRONEF

(30) Priority: 27.07.2021 US 202117386399
(43) Date of publication of application: 01.02.2023
(73) Proprietor: PRATT & WHITNEY CANADA CORP., Longueuil, Québec J4G 1A1 (CA)
(72) Inventor: XUENING, Lu, Ontario, L6H4Y4 (CA); MESHKINFAM, Ezzat, Ontario, L5K2B2 (CA); DURAND, Sean, Quebec, J4W2E6 (CA)
(74) Representative: Dehns

(56) References cited:
- EP-A1- 3 228 847
- US-A- 6 016 832
- US-A1- 2005 021 213
- US-A1- 2016 306 365

## Description

### TECHNICAL FIELD

There is an ongoing need for accurate control systems and methods for handling gaseous fuel like hydrogen over a range of operating conditions such as in aircraft operation.

### BACKGROUND

US 2005/021213 A1 discloses a prior art valve flow control system and method.

EP 3 228 847 A1 discloses a prior art aircraft engine with adaptive fuel flow estimation having flow meter feedback.

### SUMMARY

According to a first aspect of the present invention, there is provided an aircraft engine as set forth in claim 1.

In certain embodiments, the first fuel pressure sensor is disposed in the fuel feed conduit upstream of the fuel metering mechanism, the second pressure sensor is disposed in the fuel feed conduit downstream of the fuel metering mechanism and upstream of the combustor, and a third pressure sensor is connected to the delta pressure sensor such that the third pressure sensor is operable to communicate a pressure of the combustor to the delta pressure sensor. In certain such embodiments, the delta pressure sensor operatively connects to the feed conduit via a delta pressure sensor line separate from a second pressure sensor input line of the second fuel pressure sensor.

In embodiments, each of the signal indicative of a fuel pressure in the fuel feed conduit, the signal indicative of a fuel temperature in the fuel feed conduit, the second signal indicative of a fuel pressure in the fuel feed conduit, and the signal indicative of the difference in pressure between the fuel feed conduit and the combustor comprise a plurality inputs to a control algorithm executable at least in part by the controller to generate a fuel metering mechanism control signal as an output based on the plurality of inputs, wherein the controller is operable to control the fuel metering mechanism by sending the fuel metering mechanism signal to the fuel metering mechanism.

In embodiments, a flow divider assembly is fluidly connected to the outlet end of the fuel feed conduit to divide and issue flow from the fuel feed conduit into a first fuel manifold and a second fuel manifold, the first and second fuel manifolds being fluidly connected to issue fuel to a respective plurality of fuel nozzles. In certain embodiments, a first controlled flow valve is disposed in the first fuel manifold, and a second controlled flow valve is disposed in the second fuel manifold. In certain such embodiments, the first and second controlled flow valves can be solenoid valves operatively connected to the controller to selectively energize and de-energize the first and second flow valves to selectively allow flow through the first and second manifolds. In certain such embodiments, the first and second controlled flow valves can be electrohydraulic servo valves operatively connected to the controller to selectively control the first and second flow valves to selectively allow flow through the first and second manifolds.

In embodiments, a gaseous pressure and/or temperature regulated fuel supply is fluidly connected to the inlet end of the fuel feed conduit. A first plurality of gaseous hydrogen fuel nozzles is fluidly connected to the outlet end of the fuel feed conduit via a first fuel manifold. A second plurality of gaseous hydrogen fuel nozzles is fluidly connected to the outlet end of the fuel feed conduit via the second fuel manifold.

In embodiments, the system comprises a compressor section fluidly connected to an inlet of the combustor; and a turbine section fluidly connected to an outlet of the combustor. The first and second pluralities of fuel nozzles are fluidly connected to the combustor and wherein the turbine section is operatively connected to the compressor section and operable to drive the compressor section.

According to a further aspect of the present invention, there is provided a method for controlling fuel flow in an aircraft engine as set forth in claim 11.

In embodiments, if a first controlled flow valve and second controlled flow valve are both de-energized to prevent flow, the method includes controlling a flow rate through the electronic metering valve to achieve zero pounds per hour fuel flow through the electronic metering valve.

In embodiments, if the first controlled flow valve is energized to allow flow and the flow through the feed conduit is sonic, the method includes calculating a sonic flow rate as a function of a first fuel pressure in the fuel feed conduit upstream of the electronic metering valve and a first fuel temperature in the fuel feed conduit upstream of the electronic metering valve. In all other instances, if the flow through the fuel feed conduit is sub-sonic, the method includes calculating a subsonic flow rate as a function of the first fuel pressure, the first fuel temperature, a second fuel pressure in the feed conduit downstream of the electronic metering valve, and a pressure differential between the second fuel pressure and a pressure in a combustor of the aircraft engine.

In embodiments, the method includes, after calculating the supersonic flow rate or subsonic flow rate, checking an energized/de-energized status of the first controlled flow valve and of the second controlled flow valve and determining whether the flow through the fuel feed conduit is sonic repeating the steps of the method described above.

In embodiments, the method includes calculating a ratio of the second fuel pressure to the first fuel pressure, and determining the flow in the fuel feed conduit is sonic if the ratio is less than 0.5283 and is subsonic if the ratio is greater than or equal to 0.5283.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is schematic cross-sectional side elevation view an aircraft engine in accordance with this disclosure, showing a plurality of fuel components connecting a fuel source to a combustor;
Fig. 2 is a schematic view of an embodiment of a fuel control system for the engine of Fig.1 constructed in accordance with at least one aspect of this disclosure; and
Fig. 3 is a schematic flow diagram of a method of operating the control system of Fig. 2 constructed in accordance with at least one aspect of this disclosure.

### DETAILED DESCRIPTION

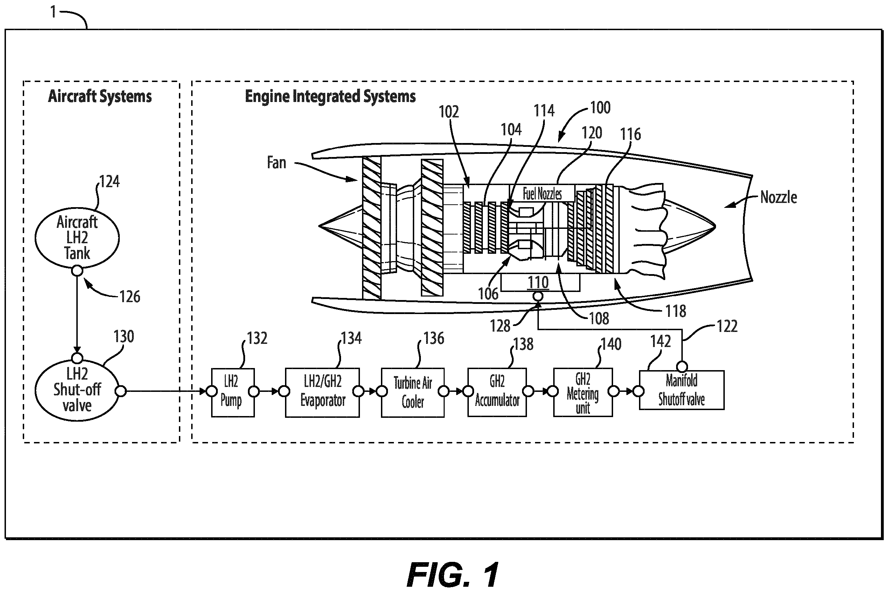

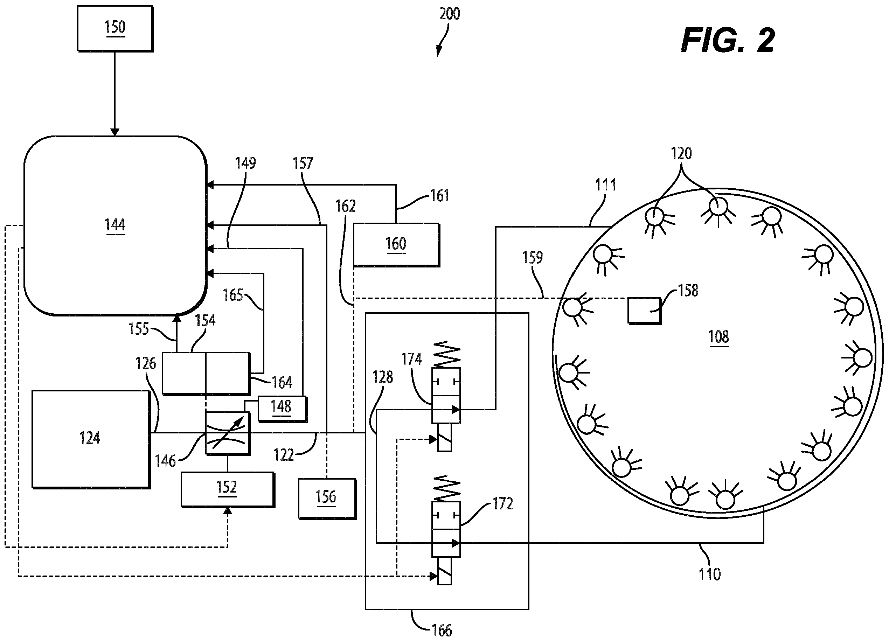

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-3. Certain embodiments described herein can be used to improve fuel metering for gaseous fuel, e.g. compressible fuels such as hydrogen gas.

The present disclosure relates generally to fuel control for gas turbine engines, and more particularly to control of gaseous fuel flow. A gas turbine engine may be fueled with gaseous fuel such as hydrogen gas. It is possible to gasify liquid hydrogen from an aircraft supply through an appropriate fuel pump, heat exchangers, pressure regulator, and metering valves. It is desired to control gaseous fuel delivery to the engine such that stable and responsive control over the wide range of flow conditions would be maintained. However, the traditional fuel control for aircraft engines are designed for purely liquid fuel flow. Liquid fuel is an incompressible fluid, whereas gaseous fuel is compressible. For hydrogen, the full fuel system can include a combination of liquid and gaseous hydrogen, meaning the fuel control system needs to control both compressible and incompressible flows.

The gaseous hydrogen is pressurized from the fuel delivering system so that pressure supplied to the fuel line P1 is regulated at a much higher pressure of the burner pressure P3 (e.g. at least double). Therefore, variation of fuel metering valve output sets a variable throat area to the valve which is maintained choked (e.g. in a sonic state) at all system flow conditions.

In certain embodiments, referring to Fig. 1, an aircraft 1 can include an engine 100, where the engine 100 can be a propulsive energy engine (e.g. creating thrust for the aircraft 1), or a non-propulsive energy engine, and a fuel system. As described herein, the engine 100 is a turbofan engine, although the present disclosure may likewise be used with other engine types. The engine 100 includes a compressor section 102 having a compressor 104 in a primary gas path 106 to supply compressed air to a combustor 108 of the aircraft engine 100. The primary gas path 106 includes a nozzle manifold 110 for issuing fluid to the combustor 108.

The primary gas path 106 includes, in fluid communication in a series: the compressor 104, the combustor 108 fluidly connected to an outlet 114 of the compressor 104, and a turbine section 116 fluidly connected to an outlet 118 of the combustor 108. The turbine section 116 is mechanically connected to the compressor 104 to drive the compressor 104.

The combustor 108 includes a plurality of fuel nozzles 120 each fluidly connected via a fuel feed conduit 122, which feeds the nozzle manifold 110, which feeds the plurality of fuel nozzles 120 of the combustor 108 with a gaseous fuel supply 124. The feed conduit 122 includes an inlet end 126 and an outlet end 128 to fluidly connect the gaseous fuel supply 124 to the combustor 108 through the plurality of fuel nozzles 120. In embodiments, the gaseous fuel supply 124 can be any suitable gaseous fuel, such as a gaseous pressure and/or temperature regulated fuel supply, which may be or include hydrogen gas.

Certain additional components may also be included in fluid communication between the combustor and the gaseous fuel supply 124 in any suitable order or combination, such as a fuel shut off valve 130, a fuel pump 132, a liquid/gaseous fuel evaporator 134, a turbine air cooling heat exchanger 136, a gaseous fuel accumulator 138, a gaseous fuel metering unit 140, and/or a fuel manifold shut off valve 142. In certain embodiments, the pre-pressurized gaseous fuel accumulator 138 can be used as backup supply pressure source.

Turning now to Fig. 2, a fuel control system 200 for controlling the flow of fuel to the aircraft engine 100 through the feed conduit 122 and the plurality of fuel nozzles 120 includes a means for regulating flow through the fuel feed conduit 122, means for generating a signal indicative of a state of the means for regulating, and a controller 144. The controller 144 can include any suitable controller, for example an electronic engine controller (EEC). The controller 144 is operatively connected to the means for regulating and to the means for generating a signal to control the means for regulating a signal based on the signal such that the controller is operable to control a state of the means for regulating to achieve a desired power output.

As described herein, the means for regulating flow through the fuel feed conduit 122 (e.g. fuel metering mechanism) can include any suitable means, for example can be or include at least one metering valve, an electronic metering valve 146, an electro-pneumatic metering valve, or a combination of valves and/or other devices. The means for generating a signal indicative of a state of the electronic metering valve 146 can include any suitable means, for example any number and/or combination of pressure and/or temperature sensors, position sensors, or the like, disposed in the engine 100 and operatively connected as disclosed herein.

As shown in Fig. 2, the electronic metering valve 146 is disposed in the fuel feed conduit 122 between the inlet end 126 and the outlet end 128 operable to regulate flow through the fuel feed conduit 122. A position feedback sensor 148 is operatively connected to the electronic metering valve 146 and operable to generate a signal 149 indicative of a position of the electronic metering valve 146. The position feedback sensor 148 can be or include any suitable position sensor, for example a linear variable differential transformer (LVDT).

The controller 144 is operatively connected to the electronic metering valve 146 and to the position feedback sensor 148 to control the position of the electronic metering valve 146 based on the signal 149 indicative of the position of the electronic metering valve 146 and a command power 150 for a desired power output of the aircraft engine 100 to achieve the desired power output, e.g. as simultaneous inputs. Upon receipt of a command power 150 to the controller 144, the position of the electronic metering valve 146 is ultimately driven by a torque motor driver 152 operatively connected to the electronic metering valve 146.

In addition to position feedback from the position feedback sensor 148, the controller 144 is configured to control the flow through the fuel nozzles 120 as a function of a plurality signals from a plurality of sensors within the engine 100. For example, three fuel pressure sensors 154, 156, 158 can be included. The first fuel pressure sensor 154 is operatively connected to the fuel feed conduit 122 upstream of the electronic metering valve 146 and operable to generate a signal 155 indicative of a fuel pressure (P1) in the fuel feed conduit 122 upstream of the electronic metering valve 146. The second fuel pressure sensor 156 is operatively connected to the fuel feed conduit 122 downstream of the first pressure sensor 154 to generate a signal 157 indicative of a fuel pressure (P2) in the fuel feed conduit 122 downstream of the electronic metering valve 146 and upstream of the combustor 108. The third pressure sensor 158, a delta pressure sensor, can be a differential pressure sensor connected to both a pressure tap 159 in the combustor 108 and to a pressure tap 162 in the fuel feed conduit 122 downstream of the electronic metering valve 146. The third pressure sensor 158, is operable to generate and communicate a signal to the controller 144 indicative of a differential pressure between the pressure P2 in the fuel feed conduit 122 and the pressure 159 (P3) of the combustor 108. The third pressure sensor 158 can be a differential pressure sensor connected to both pressure taps 162 and 159, or can be an electronic device that takes the difference between two separate pressure sensors in the positions indicated for P2 and P3, including a module of the controller 144 that simply takes the difference between the signals for P2 and P3.

The controller 144 therefore is operable to control the position of the electronic metering valve 146 based on the each of the signal indicative of an upstream pressure 155, the signal indicative of a downstream pressure 157, and the signal indicative of the difference in pressure 161 between the feed conduit 122 (downstream of the electronic metering valve 146) and the combustor 108.

In certain embodiments, a temperature sensor 164 is also operatively connected to the controller 144 such that the controller 144 is operable to control the position of the electronic metering valve 146 based on the signals as described above, in addition to a signal indicative of the fuel temperature 165 in upstream heat exchangers (e.g. 134) which regulate gas temperature at the inlet 126 of the electronic metering valve 146.

Each of the signals 149 indicative of a position of the electronic metering valve 146, the signal 155 indicative of a fuel pressure in the fuel feed conduit 122, the signal 165 indicative of a fuel temperature in the fuel feed conduit 122, the second signal 157 indicative of a fuel pressure in the fuel feed conduit 122, and the signal 159 indicative of the difference in pressure between the fuel feed conduit 122 and the combustor 108 can be input into a control algorithm executable at least in part by the controller 144 to generate a fuel metering control signal as an output based on the plurality of inputs, thus, the controller 144 is operable to control the electronic metering valve 146 by sending the fuel metering signal to the electronic metering valve 146. In embodiments, the algorithm could be constructed using the functionality as described above in addition to known general engineering principles as applied to the specific characteristics of each particular fuel system to which the technology of the present disclosure is applied.

In embodiments, a flow divider assembly 166 is fluidly connected to the outlet 128 end of the fuel feed conduit 122 to divide and issue flow from the fuel feed conduit 122 into the combustor 108 and to the plurality of fuel nozzles 120 through a first fuel manifold 110 and a second fuel manifold 111. The first fuel manifold 110 can be a primary fuel manifold configured to provide sufficient fuel during low fuel consumption such as during start up, and the second fuel manifold 111 can be a secondary fuel manifold configured to supplement the primary fuel manifold during high fuel consumption.

Fuel flow to the first and second fuel manifolds 110, 111 is controlled by a first controlled flow valve 172 is disposed in the first fuel manifold 110, and a second controlled flow valve 174 is disposed in the second fuel manifold 111. The first and second controlled flow valves 172, 174 can be any suitable controllable flow valve, such as solenoid valves operatively connected to the controller to selectively energize and de-energize the first and second flow valves 172, 174 to selectively allow flow through the first and second manifolds 110, 111 to the combustor 108. In certain embodiments, the first and second controlled flow valves 172, 174 can be electrohydraulic servo valves operatively connected to the controller 144. The energized state corresponds to an open position, where the first and second fuel manifolds 110, 111 are able to issue fuel to the fuel nozzles 120 and the combustor 108 under given engine combustion configurations, and the de-energized state corresponds to a closed position, where the first and second fuel manifolds 110, 111 are prevented from issuing fuel to the fuel nozzles 120 and combustor 108 and fuel flow is cutoff. The controller 144 can control the flow through the first and second fuel manifolds 110, 111 through the first and second controlled flow valves 172, 174 using a method as described below, for example.

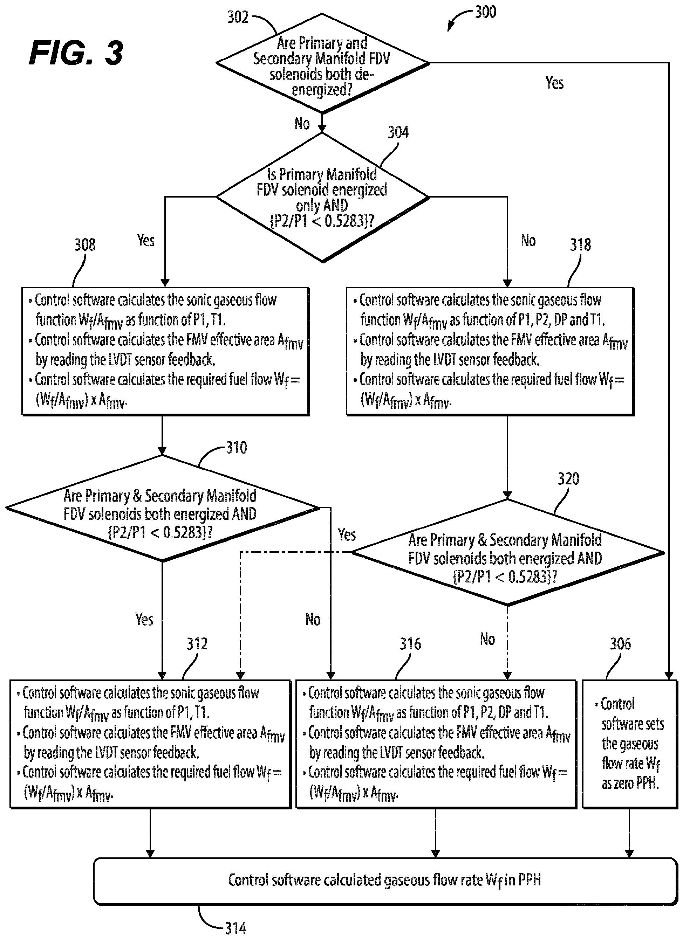

As shown in Fig. 3, there is provided an embodiment of a method 300 for controlling fuel flow in the aircraft engine 100. The method 300 includes determining 302 an energized status of the controlled flow valve 172, 174 in the fuel feed conduit 122 and determining 304 whether flow in the fuel feed conduit is subsonic or supersonic. Determining 304 if the flow in the feed conduit is subsonic or supersonic includes calculating a ratio of a second fuel pressure (P2) (e.g. from the signal 157 from the second fuel pressure sensor 156) to a first fuel pressure (P1) (e.g. from the signal 155 from the first fuel pressure sensor 154). If the ratio of second pressure to first pressure (P2/P1) is less than 0.5283, the fuel flow is considered sonic, while if the ratio is greater than or equal to 0.5283, the fuel flow is considered subsonic.

If the both the first controlled flow valve 172 and second controlled flow valve 174 are de-energized to prevent flow, the method includes controlling 306 a flow rate through the electronic metering valve to achieve zero pounds per hour fuel flow through the electronic metering valve 146, i.e. stopping fuel flow through the electronic metering valve 146.

If only the first controlled flow valve 172 is energized to allow flow to the first fuel manifold 110 and the flow through the fuel feed conduit 122 is supersonic, the method includes calculating 308 a sonic flow rate (*W_{f}*/*A_{fmv}*) as a function of the first fuel pressure (P1) in the fuel feed conduit 122 upstream of the electronic metering valve 146 and the fuel temperature (T1) in the fuel feed conduit 122 upstream of the electronic metering valve 146, where *fmv* effective area *Afmv* is a calculated by reading the position sensor feedback signal 149. Required fuel flow is then calculated using *W_{f} =* (*W_{f}*/*A_{fmv}*) × *A_{fmv}.*

The method 300 includes rechecking 310 the energized status of the controlled flow valves 172, 174 and the sonic status of the fuel flow in the fuel feed conduit 122. If both the first and second controlled flow valves 172, 174 are energized, and the flow in the fuel feed conduit 122 is still sonic, the method includes recalculating 312 the sonic flow rate, the effective area, and the required fuel flow as described above with respect to 310. The calculated gaseous fuel flow rate 314 is then outputted to the controller 144 to control the electronic metering valve 146 to control flow in the fuel feed conduit 122 and to the first and second fuel manifolds 110, 111 to achieve the desired gaseous fuel flow rate for the given desired power. If, after the recheck 310, either of the first or second controlled flow valves 171, 174 are not energized, or the flow in the fuel feed conduit 122 is now subsonic, the method 300 includes calculating 316 a subsonic required fuel flow rate as described below and outputting the calculated gaseous fuel flow rate 314 to the controller 144.

If after the initial check 302, both the first and second controlled fuel valves 172, 174 are energized, or the fuel flow in the fuel feed conduit is subsonic, the method 300 includes calculating 318 a subsonic flow rate (*W_{f}*/*A_{fmv}*) as a function of the first fuel pressure (P1) in the fuel feed conduit 122 upstream of the electronic metering valve 146, the second fuel pressure (P2) in the fuel feed conduit 122 downstream of the electronic metering valve 146, the delta pressure 161 (e.g. the difference in pressure between the combustor pressure P3 and the second fuel pressure P2), and the first fuel temperature (T1) in the fuel feed conduit 122 upstream of the electronic metering valve 146, where *fmv* effective area *Afmv* is a calculated by reading the position sensor feedback 149. Required fuel flow is then calculated using *W_{f} =* (*W_{f}*/*A_{fmv}*) × *A_{fmv}.*

The method 300 then includes rechecking 320 the energized status of the controlled flow valves 172, 174 and the sonic status of the fuel flow in the fuel feed conduit 122. If either of the first and second controlled flow valves 172, 174 are de-energized and the fuel flow in the fuel feed conduit is subsonic, the method 300 includes recalculating the subsonic required fuel flow rate as described above with respect to calculating 316. The calculated gaseous fuel flow rate 314 is then outputted to the controller 144 to control the electronic metering valve 146 to control flow in the fuel feed conduit 122 and to the first and second fuel manifolds 110, 111 to achieve the desired gaseous fuel flow rate for the given desired power. If at the recheck 320 both the first and second controlled flow valves 172, 174 are energized and the flow rate is now sonic, the method includes calculating the sonic required fuel flow rate as described above with respect to calculating 312, and outputting the calculated gaseous fuel flow rate 314 to the controller 144.

The method as described herein can be repeated as many times as needed or desired, or may run continuously while fuel is consumed.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure as defined by the appended claims.

## Claims

1. An aircraft engine (100) comprising:
a combustor (108); and
a fuel control system (200) comprising:
a fuel feed conduit (122) including an inlet end (126) and an outlet end (128);
a fuel metering mechanism (146) disposed in the fuel feed conduit (122) between the inlet end (126) and the outlet end (128) operable to regulate flow through the fuel feed conduit (122);
a position feedback sensor (148) operatively connected to the fuel metering mechanism (146) and operable to generate a signal indicative of a position of the fuel metering mechanism (146);
a controller (144) operatively connected to the fuel metering mechanism (146) and to the position feedback sensor (148) and operable to control the position of the fuel metering mechanism (146) based on the signal indicative of the position of the fuel metering mechanism (146) and a command for a desired power output of the aircraft engine (100) to achieve the desired power output;
a first fuel pressure sensor (154) operatively connected to the fuel feed conduit (122) and operable to generate a first signal indicative of a fuel pressure in the fuel feed conduit (122), the controller (144) being operatively connected to the first fuel pressure sensor (154) and operable to receive the first signal from the first fuel pressure sensor (154), wherein the controller (144) is operable to control the position of the fuel metering mechanism (146) based on the first signal indicative of the fuel pressure in the fuel feed conduit (122);
a second fuel pressure sensor (156) operatively connected to the fuel feed conduit (122) and operable to generate a second signal indicative of a fuel pressure in the fuel feed conduit (122), the controller (144) being operatively connected to the second fuel pressure sensor (156) and operable to receive the second signal from the second fuel pressure sensor (156), wherein the controller (144) is operable to control the position of the fuel metering mechanism (146) based on the second signal indicative of the fuel pressure in the fuel feed conduit (122);
a temperature sensor (164) operatively connected to the fuel feed conduit (122) and operable to generate a signal indicative of a fuel temperature in the fuel feed conduit (122), wherein the controller (144) is operable to control the position of the fuel metering mechanism (146) based on the signal indicative of the fuel temperature in the fuel feed conduit (122); and
a delta pressure sensor (158) operatively connected to the fuel feed conduit (122) and to the combustor (108), the delta pressure sensor (158) operable to generate a signal (159) indicative of a difference in pressure between the fuel feed conduit (122) and the combustor (108), wherein the controller (144) is operable to control the position of the fuel metering mechanism (146) based on the signal indicative of the difference in pressure between the fuel feed conduit (122) and the combustor (108).

2. The aircraft engine (100) as recited in claim 1, wherein the delta pressure sensor (158) operatively connects to the fuel feed conduit (122) via a delta pressure sensor line (161) separate from a second pressure sensor input line (162) of the second fuel pressure sensor (156).

3. The aircraft engine (100) as recited in claim 1 or 2, wherein the first fuel pressure sensor (154) is disposed in the fuel feed conduit (122) upstream of the fuel metering mechanism (146), wherein the second pressure sensor (156) is disposed in the fuel feed conduit (122) downstream of the fuel metering mechanism (146) and upstream of the combustor (108), and wherein a third pressure sensor is operatively connected to the delta pressure sensor and operable to communicate a pressure of the combustor (108) to the delta pressure sensor (158).

4. The aircraft engine (100) as recited in any preceding claim, wherein each of the first signal indicative of a fuel pressure in the fuel feed conduit (122), the signal indicative of a fuel temperature in the fuel feed conduit (122), the second signal indicative of a fuel pressure in the fuel feed conduit (122), and the signal indicative of the difference in pressure between the fuel feed conduit (122) and the combustor (108) comprise a plurality inputs to a control algorithm executable at least in part by the controller (144) to generate a fuel metering mechanism control signal as an output based on the plurality of inputs, wherein the controller (144) is operable to control the fuel metering mechanism (146) by sending the fuel metering mechanism control signal to the fuel metering mechanism (146).

5. The aircraft engine (100) as recited in any preceding claim, further comprising a flow divider assembly (166) fluidly connected to the outlet end (128) of the fuel feed conduit (122) to divide and issue flow from the fuel feed conduit (122) into a first fuel manifold (110) and a second fuel manifold (111), the first and second fuel manifolds (110, 111) being fluidly connected to issue fuel to a respective plurality of fuel nozzles (120).

6. The aircraft engine (100) as recited in claim 5, further comprising a first controlled flow valve (172) disposed in the first fuel manifold (110), and a second controlled flow valve (174) disposed in the second fuel manifold (111).

7. The aircraft engine (100) as recited in any preceding claim, wherein the fuel metering mechanism (146) is or includes at least one metering valve operable to regulate flow through the fuel feed conduit (122).

8. The aircraft engine (100) as recited in any preceding claim, wherein the fuel control system (200) further comprises a torque motor driver (152) operatively connected to drive the fuel metering mechanism (146) upon receipt by the torque motor driver (152) of a command signal from the controller (144) to control the position of the fuel metering mechanism (146).

9. The aircraft engine as recited in any preceding claim, wherein the fuel control system (200) further comprises:
a gaseous pressure and/or temperature regulated fuel supply (124) fluidly connected to the inlet end (126) of the fuel feed conduit (122);
a first plurality of gaseous hydrogen fuel nozzles (120) fluidly connected to the outlet end (128) of the fuel feed conduit (120) via a first fuel manifold (110); and
a second plurality of gaseous hydrogen fuel nozzles (120) fluidly connected to the outlet end (128) of the fuel feed conduit (120) via a second fuel manifold (111).

10. The aircraft engine (100) as recited in claim 9, further comprising:
a compressor section (102) fluidly connected to an inlet of the combustor (108); and
a turbine section (116) fluidly connected to an outlet (118) of the combustor (108), wherein the turbine section (116) is operatively connected to the compressor section (102) and operable to drive the compressor section (102);
wherein the first and second pluralities of fuel nozzles (120) are fluidly connected to the combustor (108).

11. A method for controlling fuel flow in the aircraft engine (100) of any preceding claim, wherein the fuel metering mechanism is an electronic fuel metering valve (146),
the method comprising:
determining an energized status of a controlled flow valve in a fuel manifold (110, 111);
determining if flow in a fuel feed conduit (122) is sonic;
calculating an effective area of the electronic fuel metering valve (146) using a signal indicative of a position of the electronic metering valve (146) from a position feedback sensor;
calculating a required fuel flow for a desired power output; and
adjusting the position of the electronic fuel metering valve (146) and/or the energized status of the flow valve to achieve the required fuel flow based on the signal indicative of the position of the electronic metering valve (146) and a command for a desired output power to achieve the desired power output.

12. The method as recited in claim 11, further comprising, if a first controlled flow valve (172) and second controlled flow valve (174) are both de-energized to prevent flow,
controlling a flow rate through the electronic metering valve (146) to achieve zero pounds per hour fuel flow through the electronic metering valve (146).

13. The method as recited in claim 11 or 12, wherein if the first controlled flow valve (172) is energized to allow flow and the flow through the feed conduit (122) is sonic, then further comprising calculating a sonic flow rate as a function of a first fuel pressure in the fuel feed conduit (122) upstream of the electronic metering valve (146) and a first fuel temperature in the fuel feed conduit (122) upstream of the electronic metering valve (146),
else, if the flow through the feed conduit (122) is sub-sonic, further comprising calculating a subsonic flow rate as a function of the first fuel pressure, the first fuel temperature, a second fuel pressure in the feed conduit (122) downstream of the electronic metering valve (146), and a pressure differential between the second fuel pressure and a pressure in a combustor (108) of the aircraft engine (100).

14. The method as recited in claim 13, further comprising, after calculating the supersonic flow rate or subsonic flow rate, checking an energized/de-energized status of the first controlled flow valve (172) and of the second controlled flow valve (174) and determining whether the flow through the fuel feed conduit (122) is sonic repeating the steps of calculating a sonic flow rate.

15. The method as recited in claim 13 or 14, further comprising calculating a ratio of the second fuel pressure to the first fuel pressure, and determining the flow in the fuel feed conduit (122) is sonic if the ratio is less than 0.5283 and is subsonic if the ratio is greater than or equal to 0.5283.

## Patentansprüche

1. Flugzeugmotor (100), umfassend:
eine Brennkammer (108); und
ein Brennstoff-Steuersystem (200), umfassend:
eine Brennstoff-Zufuhrleitung (122), die ein Einlassende (126) und ein Auslassende (128) beinhaltet;
einen Brennstoff-Dosiermechanismus (146), der in der Brennstoff-Zufuhrleitung (122) zwischen dem Einlassende (126) und dem Auslassende (128) angeordnet und betriebsfähig ist, um den Strom durch die Brennstoff-Zufuhrleitung (122) zu regulieren;
einen Positionsrückfuhrsensor (148), der betriebsfähig mit dem Brennstoff-Dosiermechanismus (146) verbunden ist und betriebsfähig ist, um ein Signal zu erzeugen, das eine Position des Brennstoff-Dosiermechanismus (146) angibt;
eine Steuerung (144), die betriebsfähig mit dem Brennstoff-Dosiermechanismus (146) und dem Positionsrückfuhrsensor (148) verbunden ist und betriebsfähig ist, um die Position des Brennstoff-Dosiermechanismus (146) basierend auf dem Signal, das die Position des Brennstoff-Dosiermechanismus (146) angibt, und einem Befehl für eine gewünschte Leistungsabgabe des Flugzeugmotors (100) zu steuern, um die gewünschte Leistungsabgabe zu erreichen;
einen ersten Brennstoff-Drucksensor (154), der betriebsfähig mit der Brennstoff-Zufuhrleitung (122) verbunden ist und betriebsfähig ist, um ein erstes Signal zu erzeugen, das einen Brennstoffdruck in der Brennstoff-Zufuhrleitung (122) angibt, wobei die Steuerung (144) betriebsfähig mit dem ersten Brennstoff-Drucksensor (154) verbunden ist und betriebsfähig ist, um das erste Signal von dem ersten Brennstoff-Drucksensor (154) zu empfangen, wobei die Steuerung (144) betriebsfähig ist, um die Position des Brennstoff-Dosiermechanismus (146) basierend auf dem ersten Signal, das den Brennstoffdruck in der Brennstoff-Zufuhrleitung (122) angibt, zu steuern;
einen zweiten Brennstoff-Drucksensor (156), der betriebsfähig mit der Brennstoff-Zufuhrleitung (122) verbunden ist und betriebsfähig ist, um ein zweites Signal zu erzeugen, das einen Brennstoffdruck in der Brennstoff-Zufuhrleitung (122) angibt, wobei die Steuerung (144) betriebsfähig mit dem zweiten Brennstoff-Drucksensor (156) verbunden ist und betriebsfähig ist, um das zweite Signal von dem zweiten Brennstoff-Drucksensor (156) zu empfangen, wobei die Steuerung (144) betriebsfähig ist, um die Position des Brennstoff-Dosiermechanismus (146) basierend auf dem zweiten Signal, das den Brennstoffdruck in der Brennstoff-Zufuhrleitung (122) angibt, zu steuern;
einen Temperatursensor (164), der betriebsfähig mit der Brennstoff-Zufuhrleitung (122) verbunden ist und betriebsfähig ist, um ein Signal zu erzeugen, das eine Brennstofftemperatur in der Brennstoff-Zufuhrleitung (122) angibt, wobei die Steuerung (144) betriebsfähig ist, um die Position des Brennstoff-Dosiermechanismus (146) basierend auf dem Signal, das die Brennstofftemperatur in der Brennstoff-Zufuhrleitung (122) angibt, zu steuern; und
einen Delta-Drucksensor (158), der betriebsfähig mit der Brennstoff-Zufuhrleitung (122) und mit der Brennkammer (108) verbunden ist, wobei der Delta-Drucksensor (158) betriebsfähig ist, um ein Signal (159) zu erzeugen, das einen Druckunterschied zwischen der Brennstoff-Zufuhrleitung (122) und der Brennkammer (108) angibt, wobei die Steuerung (144) betriebsfähig ist, um die Position des Brennstoff-Dosiermechanismus (146) basierend auf dem Signal, das den Druckunterschied zwischen der Brennstoff-Zufuhrleitung (122) und der Brennkammer (108) angibt, zu steuern.

2. Flugzeugmotor (100) nach Anspruch 1, wobei der Delta-Drucksensor (158) betriebsfähig über eine von einer zweiten Drucksensoreingangsleitung (162) des zweiten Brennstoff-Drucksensors (156) getrennte Delta-Drucksensorleitung (161) mit der Brennstoff-Zufuhrleitung (122) verbunden ist.

3. Flugzeugmotor (100) nach Anspruch 1 oder 2, wobei der erste Brennstoff-Drucksensor (154) in der Brennstoff-Zufuhrleitung (122) stromaufwärts des Brennstoff-Dosiermechanismus (146) angeordnet ist, wobei der zweite Drucksensor (156) in der Brennstoff-Zufuhrleitung (122) stromabwärts des Brennstoff-Dosiermechanismus (146) und stromaufwärts der Brennkammer (108) angeordnet ist, und wobei ein dritter Drucksensor betriebsfähig mit dem Delta-Drucksensor verbunden ist und betriebsfähig ist, um einen Druck der Brennkammer (108) an den Delta-Drucksensor (158) zu kommunizieren.

4. Flugzeugmotor (100) nach einem der vorhergehenden Ansprüche, wobei jedes des ersten Signals, das einen Brennstoffdruck in der Brennstoff-Zufuhrleitung (122) angibt, des Signals, das eine Brennstofftemperatur in der Brennstoff-Zufuhrleitung (122) angibt, des zweiten Signals, das einen Brennstoffdruck in der Brennstoff-Zufuhrleitung (122) angibt, und des Signals, das den Druckunterschied zwischen der Brennstoff-Zufuhrleitung (122) und der Brennkammer (108) angibt, eine Vielzahl von Eingaben in einen Steueralgorithmus, der zumindest teilweise durch die Steuerung (144) ausführbar ist, um ein Brennstoff-Dosiermechanismus-Steuersignal als eine Ausgabe basierend auf der Vielzahl von Eingaben zu erzeugen, umfassen, wobei die Steuerung (144) betriebsfähig ist, um den Brennstoff-Dosiermechanismus (146) durch Senden des Brennstoff-Dosiermechanismus-Steuersignals an den Brennstoff-Dosiermechanismus (146) zu steuern.

5. Flugzeugmotor (100) nach einem der vorhergehenden Ansprüche, ferner umfassend eine Stromteiler-Baugruppe (166), die mit dem Auslassende (128) der Brennstoff-Zufuhrleitung (122) in Fluidverbindung steht, um den Strom von der Brennstoff-Zufuhrleitung (122) in einen ersten Brennstoffverteiler (110) und einen zweiten Brennstoffverteiler (111) aufzuteilen und abzugeben, wobei der erste und der zweite Brennstoffverteiler (110, 111) in Fluidverbindung stehen, um Brennstoff an eine jeweilige Vielzahl von Brennstoffdüsen (120) abzugeben.

6. Flugzeugmotor (100) nach Anspruch 5, ferner umfassend ein erstes gesteuertes Stromventil (172), das in dem ersten Brennstoffverteiler (110) angeordnet ist, und ein zweites gesteuertes Stromventil (174), das in dem zweiten Brennstoffverteiler (111) angeordnet ist.

7. Flugzeugmotor (100) nach einem der vorhergehenden Ansprüche, wobei der Brennstoff-Dosiermechanismus (146) mindestens ein Dosierventil ist oder beinhaltet, das betriebsfähig ist, um den Strom durch die Brennstoff-Zufuhrleitung (122) zu regulieren.

8. Flugzeugmotor (100) nach einem der vorhergehenden Ansprüche, wobei das Brennstoff-Steuersystem (200) ferner einen Drehmoment-Motortreiber (152) umfasst, der betriebsfähig verbunden ist, um den Brennstoff-Dosiermechanismus (146) bei Empfang eines Befehlssignals von der Steuerung (144) zum Steuern der Position des Brennstoff-Dosiermechanismus (146) durch den Drehmoment-Motortreiber (152) anzutreiben.

9. Flugzeugmotor nach einem der vorhergehenden Ansprüche, wobei das Brennstoff-Steuersystem (200) ferner Folgendes umfasst:
eine gasförmige, druck- und/oder temperaturgeregelte Brennstoffversorgung (124), die mit dem Einlassende (126) der Brennstoff-Zufuhrleitung (122) in Fluidverbindung steht;
eine erste Vielzahl von gasförmigen Wasserstoff-Brennstoffdüsen (120), die über einen ersten Brennstoffverteiler (110) mit dem Auslassende (128) der Brennstoff-Zufuhrleitung (120) in Fluidverbindung stehen; und
eine zweite Vielzahl von gasförmigen Wasserstoff-Brennstoffdüsen (120), die über einen zweiten Brennstoffverteiler (111) mit dem Auslassende (128) der Brennstoff-Zufuhrleitung (120) in Fluidverbindung stehen.

10. Flugzeugmotor (100) nach Anspruch 9, ferner umfassend:
einen Verdichterabschnitt (102), der mit einem Einlass der Brennkammer (108) in Fluidverbindung steht; und
einen Turbinenabschnitt (116), der mit einem Auslass (118) der Brennkammer (108) in Fluidverbindung steht, wobei der Turbinenabschnitt (116) mit dem Verdichterabschnitt (102) betriebsfähig verbunden ist und betriebsfähig ist, um den Verdichterabschnitt (102) anzutreiben;
wobei die erste und zweite Vielzahl von Brennstoffdüsen (120) mit der Brennkammer (108) in Fluidverbindung stehen.

11. Verfahren zum Steuern von Brennstoffstrom in dem Flugzeugmotor (100) nach einem der vorhergehenden Ansprüche, wobei der Brennstoff-Dosiermechanismus ein elektronisches Brennstoff-Dosierventil (146) ist, wobei das Verfahren Folgendes umfasst:
Bestimmen eines eingeschalteten Zustands eines gesteuerten Stromventils in einem Brennstoffverteiler (110, 111);
Bestimmen, ob der Strom in einer Brennstoff-Zufuhrleitung (122) schallartig ist;
Berechnen einer effektiven Fläche des elektronischen Brennstoff-Dosierventils (146) unter Verwendung eines Signals, das die Position des elektronischen Dosierventils (146) von einem Positionsrückfuhrsensor angibt;
Berechnen eines erforderlichen Brennstoffstroms für eine gewünschte Leistungsausgabe; und
Anpassen der Position des elektronischen Brennstoff-Dosierventils (146) und/oder des eingeschalteten Zustands des Stromventils, um den erforderlichen Brennstoffstrom basierend auf dem Signal, das die Position des elektronischen Dosierventils (146) angibt, und einem Befehl für eine gewünschte Ausgangsleistung, um die gewünschte Ausgangsleistung zu erreichen.

12. Verfahren nach Anspruch 11, ferner umfassend, wenn ein erstes gesteuertes Stromventil (172) und ein zweites gesteuertes Stromventil (174) beide abgeschaltet sind, um Strom zu verhindern,
Steuern der Stromrate durch das elektronische Stromventil (146), um einen Brennstoffstrom von null Pfund pro Stunde durch das elektronische Stromventil (146) zu erreichen.

13. Verfahren nach Anspruch 11 oder 12, wobei, wenn das erste gesteuerte Stromventil (172) eingeschaltet wird, um Strom zu ermöglichen, und der Strom durch die Zufuhrleitung (122) schallartig ist, dann ferner umfassend das Berechnen einer Schallstromrate in Abhängigkeit von einem ersten Brennstoffdruck in der Brennstoff-Zufuhrleitung (122) stromaufwärts des elektronischen Dosierventils (146) und einer ersten Brennstofftemperatur in der Brennstoff-Zufuhrleitung (122) stromaufwärts des elektronischen Dosierventils (146),
andernfalls, wenn der Strom durch die Leitung (122) unterschallartig ist, ferner umfassend das Berechnen einer Unterschnall-Stromrate in Abhängigkeit von dem ersten Brennstoffdruck, der ersten Brennstofftemperatur, einem zweiten Brennstoffdruck in der Leitung (122) stromabwärts des elektronischen Dosierventils (146) und einer Druckdifferenz zwischen dem zweiten Brennstoffdruck und einem Druck in einer Brennkammer (108) des Flugzeugmotors (100).

14. Verfahren nach Anspruch 13, ferner umfassend Überprüfen eines eingeschalteten/ausgeschalteten Zustands des ersten gesteuerten Stromventils (172) und des zweiten gesteuerten Stromventils (174) nach dem Berechnen der Überschall- oder Unterschall-Stromrate und Bestimmen, ob der Strom durch die Brennstoff-Zufuhrleitung (122) schallartig ist, durch Wiederholen der Schritte des Berechnens einer Schallstromrate.

15. Verfahren nach Anspruch 13 oder 14, ferner umfassend das Berechnen eines Verhältnisses des zweiten Brennstoffdrucks zum ersten Brennstoffdruck und das Bestimmen des Stroms in der Brennstoff-Zufuhrleitung (122) als schallartig, wenn das Verhältnis kleiner als 0,5283 ist, und als unterschallartig, wenn das Verhältnis größer oder gleich 0,5283 ist.

## Revendications

1. Moteur d'aéronef (100) comprenant :
une chambre de combustion (108) ; et
un système de commande de carburant (200) comprenant :
un conduit d'alimentation en carburant (122) comportant une extrémité d'entrée (126) et une extrémité de sortie (128) ;
un mécanisme de dosage de carburant (146) disposé dans le conduit d'alimentation en carburant (122) entre l'extrémité d'entrée (126) et l'extrémité de sortie (128) pouvant fonctionner pour réguler le débit à travers le conduit d'alimentation en carburant (122) ;
un capteur de rétroaction de position (148) connecté de manière opérationnelle au mécanisme de dosage de carburant (146) et pouvant fonctionner pour générer un signal indiquant une position du mécanisme de dosage de carburant (146) ;
un contrôleur (144) connecté de manière opérationnelle au mécanisme de dosage de carburant (146) et au capteur de rétroaction de position (148) et pouvant fonctionner pour commander la position du mécanisme de dosage de carburant (146) sur la base du signal indiquant la position du mécanisme de dosage de carburant (146) et d'une commande pour une puissance de sortie souhaitée du moteur d'aéronef (100) pour obtenir la puissance de sortie souhaitée ;
un premier capteur de pression de carburant (154) connecté de manière opérationnelle au conduit d'alimentation en carburant (122) et pouvant fonctionner pour générer un premier signal indicatif d'une pression de carburant dans le conduit d'alimentation en carburant (122), le contrôleur (144) étant connecté de manière opérationnelle au premier capteur de pression de carburant (154) et pouvant fonctionner pour recevoir le premier signal du premier capteur de pression de carburant (154), dans lequel le contrôleur (144) peut fonctionner pour commander la position du mécanisme de dosage de carburant (146) sur la base du premier signal indicatif de la pression de carburant dans le conduit d'alimentation en carburant (122) ;
un second capteur de pression de carburant (156) connecté de manière opérationnelle au conduit d'alimentation en carburant (122) et pouvant fonctionner pour générer un second signal indicatif d'une pression de carburant dans le conduit d'alimentation en carburant (122), le contrôleur (144) étant connecté de manière opérationnelle au second capteur de pression de carburant (156) et pouvant fonctionner pour recevoir le second signal du second capteur de pression de carburant (156), dans lequel le contrôleur (144) peut fonctionner pour commander la position du mécanisme de dosage de carburant (146) sur la base du second signal indicatif de la pression de carburant dans le conduit d'alimentation en carburant (122) ;
un capteur de température (164) connecté de manière opérationnelle au conduit d'alimentation en carburant (122) et pouvant fonctionner pour générer un signal indicatif d'une température de carburant dans le conduit d'alimentation en carburant (122), dans lequel le contrôleur (144) peut fonctionner pour contrôler la position du mécanisme de dosage de carburant (146) sur la base du signal indicatif de la température de carburant dans le conduit d'alimentation en carburant (122) ; et
un capteur de pression delta (158) connecté de manière opérationnelle au conduit d'alimentation en carburant (122) et à la chambre de combustion (108), le capteur de pression delta (158) pouvant fonctionner pour générer un signal (159) indicatif d'une différence de pression entre le conduit d'alimentation en carburant (122) et la chambre de combustion (108), dans lequel le contrôleur (144) peut fonctionner pour commander la position du mécanisme de dosage de carburant (146) sur la base du signal indicatif de la différence de pression entre le conduit d'alimentation en carburant (122) et la chambre de combustion (108).

2. Moteur d'aéronef (100) selon la revendication 1, dans lequel le capteur de pression delta (158) se connecte de manière opérationnelle au conduit d'alimentation en carburant (122) par une ligne de capteur de pression delta (161) séparée d'une seconde ligne d'entrée de capteur de pression (162) du second capteur de pression de carburant (156).

3. Moteur d'aéronef (100) selon la revendication 1 ou 2, dans lequel le premier capteur de pression de carburant (154) est disposé dans le conduit d'alimentation en carburant (122) en amont du mécanisme de dosage de carburant (146), dans lequel le second capteur de pression (156) est disposé dans le conduit d'alimentation en carburant (122) en aval du mécanisme de dosage de carburant (146) et en amont de la chambre de combustion (108), et dans lequel un troisième capteur de pression est connecté de manière opérationnelle au capteur de pression delta et peut être utilisé pour communiquer une pression de la chambre de combustion (108) au capteur de pression delta (158).

4. Moteur d'aéronef (100) selon une quelconque revendication précédente, dans lequel chacun du premier signal indicatif d'une pression de carburant dans le conduit d'alimentation en carburant (122), du signal indicatif d'une température de carburant dans le conduit d'alimentation en carburant (122), du second signal indicatif d'une pression de carburant dans le conduit d'alimentation en carburant (122) et du signal indicatif de la différence de pression entre le conduit d'alimentation en carburant (122) et la chambre de combustion (108) comprend une pluralité d'entrées dans un algorithme de commande exécutable au moins en partie par le contrôleur (144) pour générer un signal de commande de mécanisme de dosage de carburant en tant que sortie sur la base de la pluralité d'entrées, dans lequel le contrôleur (144) peut fonctionner pour commander le mécanisme de dosage de carburant (146) en envoyant le signal de commande de mécanisme de dosage de carburant au mécanisme de dosage de carburant (146).

5. Moteur d'aéronef (100) selon une quelconque revendications précédente, comprenant également un ensemble de diviseur de flux (166) connecté de manière fluidique à l'extrémité de sortie (128) du conduit d'alimentation en carburant (122) pour diviser et délivrer le flux du conduit d'alimentation en carburant (122) dans un premier collecteur de carburant (110) et un second collecteur de carburant (111), les premier et second collecteurs de carburant (110, 111) étant reliés de manière fluidique pour délivrer du carburant à une pluralité respective de buses de carburant (120).

6. Moteur d'aéronef (100) tel que décrit dans la revendication 5, comprenant également une première vanne à débit contrôlé (172) disposée dans le premier collecteur de carburant (110), et une seconde vanne à débit contrôlé (174) disposée dans le second collecteur de carburant (111).

7. Moteur d'aéronef (100) tel que décrit dans une quelconque revendication précédente, dans lequel le mécanisme de dosage de carburant (146) est ou comporte au moins une vanne de dosage pouvant fonctionner pour réguler le débit à travers le conduit d'alimentation en carburant (122).

8. Moteur d'aéronef (100) selon une quelconque revendication précédente, dans lequel le système de commande de carburant (200) comprend également un pilote de moteur couple (152) connecté de manière opérationnelle pour entraîner le mécanisme de dosage de carburant (146) lors de la réception par le pilote de moteur couple (152) d'un signal de commande provenant du contrôleur (144) pour commander la position du mécanisme de dosage de carburant (146).

9. Moteur d'aéronef selon une quelconque revendication précédente, dans lequel le système de commande de carburant (200) comprend également :
une alimentation en carburant gazeux régulée en pression et/ou en température (124) reliée de manière fluidique à l'extrémité d'entrée (126) du conduit d'alimentation en carburant (122) ;
une première pluralité de buses de carburant à hydrogène gazeux (120) connectées de manière fluidique à l'extrémité de sortie (128) du conduit d'alimentation en carburant (120) par un premier collecteur de carburant (110) ; et
une seconde pluralité de buses de carburant à hydrogène gazeux (120) connectées de manière fluidique à l'extrémité de sortie (128) du conduit d'alimentation en carburant (120) par un second collecteur de carburant (111).

10. Moteur d'aéronef (100) selon la revendication 9, comprenant également :
une section de compresseur (102) connectée de manière fluidique à une entrée de la chambre de combustion (108) ; et
une section de turbine (116) reliée de manière fluidique à une sortie (118) de la chambre de combustion (108), dans lequel la section de turbine (116) est connectée fonctionnellement à la section de compresseur (102) et peut être actionnée pour entraîner la section de compresseur (102) ;
dans lequel les première et seconde pluralités de buses de carburant (120) sont connectées de manière fluidique à la chambre de combustion (108).

11. Procédé de régulation du débit de carburant dans le moteur d'aéronef (100) selon une quelconque revendication précédente, dans lequel le mécanisme de dosage de carburant est une vanne de dosage de carburant électronique (146), le procédé comprenant :
la détermination d'un état sous tension d'une vanne à débit contrôlé dans un collecteur de carburant (110, 111) ;
la détermination si l'écoulement dans un conduit d'alimentation en carburant (122) est sonique ;
le calcul d'une surface efficace de la vanne de dosage électronique de carburant (146) à l'aide d'un signal indiquant une position de la vanne de dosage électronique (146) provenant d'un capteur de rétroaction de position ;
le calcul du débit de carburant requis pour obtenir la puissance de sortie souhaitée ; et
le réglage de la position de la vanne de dosage de carburant électronique (146) et/ou de l'état sous tension de la vanne de débit pour obtenir le débit de carburant requis sur la base du signal indiquant la position de la vanne de dosage de carburant électronique (146) et d'une commande pour une puissance de sortie souhaitée pour obtenir la puissance de sortie souhaitée.

12. Procédé selon la revendication 11, comprenant également, si une première vanne à débit contrôlé (172) et une seconde vanne à débit contrôlé (174) sont toutes deux hors tension pour empêcher l'écoulement,
le contrôle d'un débit à travers la vanne de dosage électronique (146) pour obtenir un débit de carburant de zéro livre par heure à travers la vanne de dosage électronique (146).

13. Procédé selon la revendication 11 ou 12, dans lequel, si la première vanne à débit contrôlé (172) est excitée pour permettre l'écoulement et que l'écoulement à travers le conduit d'alimentation (122) est sonique, alors comprenant également le calcul d'un débit sonique en fonction d'une première pression de carburant dans le conduit d'alimentation en carburant (122) en amont de la vanne de dosage électronique (146) et d'une première température de carburant dans le conduit d'alimentation en carburant (122) en amont de la vanne de dosage électronique (146),
sinon, si l'écoulement à travers le conduit d'alimentation (122) est subsonique, comprenant également le calcul d'un débit subsonique en fonction de la première pression de carburant, de la première température de carburant, d'une seconde pression de carburant dans le conduit d'alimentation (122) en aval de la vanne de dosage électronique (146), et d'un différentiel de pression entre la seconde pression de carburant et une pression dans une chambre de combustion (108) du moteur d'aéronef (100).

14. Procédé selon la revendication 13, comprenant également, après avoir calculé le débit supersonique ou le débit subsonique, la vérification d'un état excité/désexcité de la première vanne de débit contrôlé (172) et de la seconde vanne de débit contrôlé (174) et la détermination si le débit à travers le conduit d'alimentation en carburant (122) est sonique en répétant les étapes de calcul d'un débit sonique.

15. Procédé selon la revendication 13 ou 14, comprenant également le calcul d'un rapport de la seconde pression de carburant à la première pression de carburant, et la détermination du fait que le débit dans le conduit d'alimentation en carburant (122) est sonique si le rapport est inférieur à 0,5283 et est subsonique si le rapport est supérieur ou égal à 0,5283.
